# EUROPEAN PATENT SPECIFICATION

(11) **EP 0 530 351 B1**
(45) Date of publication and mention of the grant of the patent: **07.05.1997**
(21) Application number: 92908480.4
(22) Date of filing: 05.03.1992
(51) Int. Cl.: G06F 11/00, G06F 9/44

(54) **IMPROVED SYSTEM AND METHOD FOR DETECTING CROSS-DOMAIN INSTRUCTION CALLS AND DATA REFERENCES ESPECIALLLY ADAPTED FOR CODE INTERFACE JACKETING IN A MULTI-CODE EXECUTION AND DEBUGGING SYSTEM WITHIN A MULTI-ARCHITECTURE ENVIRONMENT**
VERBESSERTES SYSTEM UND VERFAHREN ZUM FESTSTELLEN VON KREUZWEISEN RUFBEFEHLEN UND SPEICHERDATEN, INSBESONDERE ZUR CODE-SCHNITTSTELLEN-AUSFÜHRUNG IM MEHRFACHEN CODE-AUSFÜHRUNGS- UND FEHLERSUCHSYSTEM EINER MEHRRECHNERARCHITEKTUR
PROCEDE ET SYSTEME AMELIORES DE DETECTION D'APPELS D'INSTRUCTIONS DU DOMAINE CROISE ET DE REFERENCES DE DONNEES SPECIALEMENT CONCUS POUR EFFECTUER L'ADAPTATION D'INTERFACE DE CODE DANS UN SYSTEME D'EXECUTION ET DE MISE AU POINT MULTICODE D'UN ORDINATEUR A ARCHITECTURES MULTIPLES

(30) Priority: 07.03.1991 US 666072
(43) Date of publication of application: 10.03.1993
(73) Proprietor: DIGITAL EQUIPMENT CORPORATION, Maynard, MA 01754 (US)
(72) Inventor: HERDEG, Mark, A., Leominster, MA 01453 (US); ROBINSON, Scott, G., Tyngsboro, MA 01879 (US); BRENDER, Ronald, F., Hollis, NH 03049 (US); ILES, Michael V., Basingstoke, Hampshire RG24 0TR (GB)
(74) Representative: Goodman, Christopher
(86) International application number: US9201722
(87) International publication number: WO9215961

(56) References cited:
- EP-A- 0 387 172
- EP-A- 0 411 584
- EDN ELECTRICAL DESIGN NEWS, vol. 31, no. 25, 11 December 1986, Newton, Massachusetts, US; pp. 196-204; MAURY WRIGHT: ' P simulators let you debug software on an IBM PC'

## Description

### BACKGROUND OF THE INVENTION

The present invention relates to multi-code execution and debugging systems and methods employed within a multi-architecture environment and more particularly to the detection of cross-domain routine calls and data references supportive to the management of cross-domain interfacing during mixed code execution in such systems and methods.

In the operation of a system that executes multiple codes within a multi-architecture environment, code execution crosses boundaries from time to time in accordance with the instruction sequences in the code. Some systems employ multi-code execution in a multi-architecture environment domain to execute, test, and debug new or modified software designed for a new hardware architecture even though the actual new hardware, a new operating system therefor and/or support software are not available. A jacketing system as set forth in EP-A-0530350 facilitates cross-domain execution efficiently and essentially transparently in such a system.

The present invention is directed to a new and improved system for detecting calls for cross-domain code execution and cross-domain data references during the execution of multiple codes in a multi-architecture system. Such detection generally facilitates interfacing among routines in the various domains and, specifically, is supportive to transparent jacketing in the jacketing system of EP-A-0530350 and to efficient and effective system management in a multi-architecture debugging/simulating system.

EP-A-0387172 describes a procedure call interface system which facilitates the calling of standard library procedures by an applications program. When called, the interface determines the location and calling convention used by the desired library procedure.

EDN, Vol. 31, No. 25, pp. 196-204; Maury Wright: "Microprocessor simulators let you debug software on an IBM PC" describes microprocessor simulators which debug software.

### SUMMARY OF THE INVENTION

The invention is defined according to claim 1 (method) and claim 11 (apparatus).

A cross-domain call detecting system is provided in a computer system that embodies a first hardware (X) architecture and includes a memory system and a system for executing and debugging multiple codes having a subsystem for simulating at least a second computer hardware (Y) architecture on the computer system and a jacketing subsystem for handling cross-domain calls.

An X code and a Y code are stored in the memory system. The X code is executed on the X hardware and the Y code is executed, by a simulator also on the X hardware.

Means are provided for detecting calls from executing X code routines for services in the Y domain and for detecting calls from executing Y code routines for services in the X domain. The detected cross-domain calls are passed for processing by the jacketing system.

### BRIEF DESCRIPTION OF THE DRAWINGS

The accompanying drawings, which are incorporated in and constitute a part of this specification, illustrate one embodiment of the invention and, together with the description, provide an explanation of the objects, advantages and principles of the invention. In the drawings:
FIGURE 1 shows a functional block diagram of a system for executing and debugging multiple codes in a multi-architecture environment;
FIGURE 2A shows a more detailed functional block diagram of a software system which is employed in the system of FIGURE 1 and which includes a system for detecting cross domain instruction calls and certain data references in accordance with the present invention;
FIGURE 2B shows a flow chart for a driver loop employed by an environment manager included as a part of the system of FIGURE 2A;
FIGURE 3 shows a functional block diagram representing the process by which programs are created for the multi-architecture system of FIGURE 1;
FIGURE 4 shows a functional block diagram representing the software and hardware structure of the cross-domain detection system shown in FIGURE 2A;
FIGURE 5 illustrates the operation of stub routines structured into the executing code to provide for detecting cross-domain routine calls;
FIGURE 6 shows a flow chart for a reserved operand fault routine that provides for automatic detection of cross-domain routine calls from a native architecture in the multi-architecture system;
FIGURE 7 shows a flow chart for an address range check routine employed in the detection system to determine the domain to which a call is made;
FIGURE 8 shows a flow chart for a routine that detects a cross-domain data reference that requires jacketing; and
FIGURE 9 shows a flow chart for a jacketing routine employed by a jacketing system to jacket cross-domain calls at run-time.

### DESCRIPTION OF THE PREFERRED EMBODIMENT

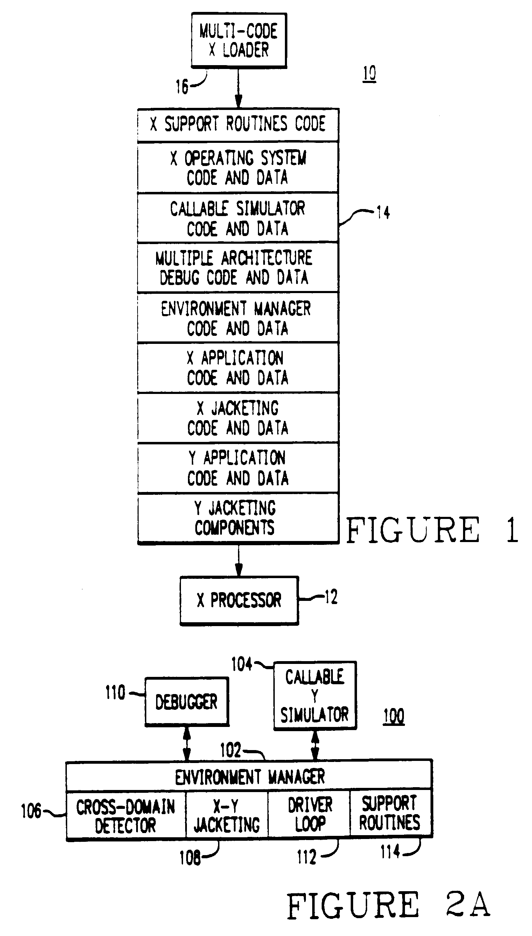

More particularly, there is shown in FIGURE 1 a system 10 that is arranged to execute and debug multiple codes in a multi- architecture environment. An X processor 12 forms a part of a real X architecture that provides for the execution of multiple codes including X code.

Generally, the system 10 can be operated to process and execute multiple codes, but in the preferred embodiment the system 10 is structured for executing up to two codes, i.e., the X code and another code designated as Y code. The system 10 may directly execute a new user level or other level program compiled in or translated to the Y code and in doing so make use of X operating system and support software.

As an example of a commercial application of the system 10 for translated X program code, the X code may be a complex instruction set code (CISC) for which a hardware implementation exists and the Y code may be a reduced instruction set code (RISC) for which no real RISC hardware exists. A typical CISC system is the VAX? computer system manufactured by the assignee of the present application. Reference is made to EP-A-0537309, EP-A-0 528 024, EP-A-0 528 020, EP-A-0532744 and EP-A-0530350 which are related to CISC-to-RISC translation systems.

The system 10 further includes a memory system 14 having a general layout for program and data components as shown in FIGURE 1. An X loader 16 provides for program code entry into the memory system 14.

Figure 2A shows the architecture of a software system 100 which can be executed by the system 10. A callable simulator 104 functions as part of software system 100 within a second architecture (domain), which is preferably a Y architecture embodied in the X hardware. The simulator 104 is structured to emulate Y hardware on the X hardware that may be under development and unavailable. Generally, the simulator 104 executes Y instructions on call from X code through an environment manager 102. Calls may also be made from the Y code through the environment manager 102 for X code execution. For example, the Y code may represent a user level application program and may call for execution of a routine that is located in an X library or it may make a call requiring operating system processing in the X domain.

A debugging capability need not be included in the system 10 where system operation is limited to multi-code execution. However, debugging is provided where the system 10 is to be used for code testing.

A debugger system 110 provides for debugging operations within the Y domain under control of the environment manager 102. In its total operation, the debugger system 110 provides the user with control over the execution of code in either domain so that the whole execution process may be examined and modified to correct malfunctions. Generally, the debugger system provides the procedures needed for debugging operations such as setting breakpoints in both the X and Y domains. The debugger 110 is structured for interaction with the callable simulator 104 within the system 100. Reference is made to EP-A-0532744 for a detailed description of the structure and operation of the debugger 110.

A cross-domain detector system 106 is employed by the environment manager 102 to determine when a cross-domain call is made during the execution of either the X code or the Y code. An X-Y jacketing system 108 operates within the environment manager system 102 to provide the X and Y executable instruction interfacing needed to implement cross-domain calls between routines. Reference is made to EP-A-0530350 for more detailed disclosure of the detector and jacketing systems 106 and 108.

The environment manager 102 exercises supervisory control over the callable simulator 104 and the debugger 110 through the execution of a driver loop 112. Support routines 114 provide various services, especially on request from the debugger 110.

With use of the code translation system and method disclosed in EP-A-0537309 and EP-A-0 528 024, CISC user level and other X programs can be translated to functionally equivalent RISC Y programs which can be executed on real CISC X hardware by the system 10 for testing and debugging purposes, even though operable RISC Y hardware is unavailable.

Advantageously, an X program can be partially translated to Y program code, or a new program can be partially written in Y code for execution with supporting or other X program code, and the mixed X-Y program code can be executed by the system 10 for testing and debugging of both the X and Y codes. The Y code is executed, tested and debugged on the simulated architecture and the remaining X code is executed, tested and debugged on the native architecture. With successful testing of the existing Y code, additional segments of X code can be translated for stepped Y code testing and debugging until the X code is fully translated and the Y code testing and debugging is completed. With the use of progressively stepped testing and debugging, the entire testing and debugging process is facilitated.

Overall, a program can be executed and tested for the Y architecture by translating or compiling it into Y code and running the Y code on the callable system simulator with the run-time environment for the Y code being provided by the operating system and run-time libraries executing on the X or native hardware architecture that is included in the multi-architecture system. The composite software thus includes X and Y codes that are properly executed on the combined X (real) and Y (simulated) architectures. In the preferred embodiment described herein, the operating system for the composite software system is structurally included in the X architecture.

The code boundary between the real and simulated architectures is generally open to the system user's needs. For example, the code boundary can be between the program being ported and the X operating system or, as indicated above it can even be within the program being ported.

The software system 100 generally has application to widely different architectures. The system 100 also has application to different computer systems that have different operating systems and different computer systems, but such application is facilitated if the architecture-implementation systems have similar operating systems and similar calling standards. Reference is made to EP-A-0530350 for additional background information on calling systems and differences among them.

### DRIVER LOOP

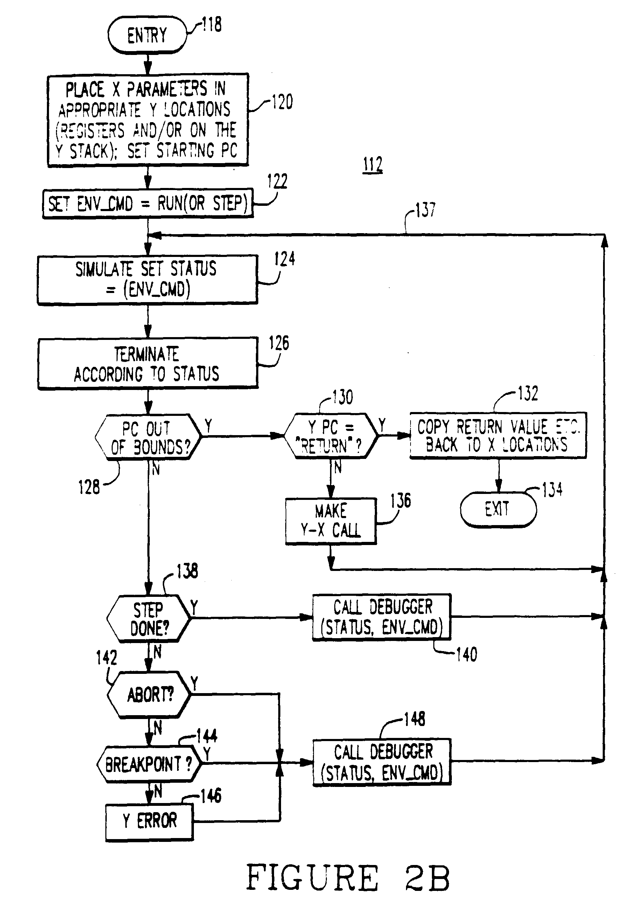

In FIGURE 2B, there is shown a flow chart for the driver loop 112 which drives the simulation/debugging operation. Entry is made to the loop 112 at block 118 when a call is made from X code, often from X application code for execution of a Y routine through the jacketing system 108. Jacketing provides interfacing between the X and Y codes to adjust for calling standard differences.

In block 120, parameters are set up as part of the jacketing process, and in particular X parameters are placed in appropriate Y locations for use during Y code execution. Thus, for normally jacketed routine calls, jacketing tables are referenced in the jacketing system 108 to determine where parameters come from in the X domain and where the corresponding values must be placed in the Y domain. For auto-jacketed routine calls, standard call rules are embedded in special code for this purpose in the jacketing system 108. More detail on jacketing for domain interface purposes is set forth in EP-A-0530350.

A special or distinguished return address is placed in the standard return-address register. The distinguished return address is outside the address bounds previously established as containing Y code. It must also be different from an address that might be used to encode a Y-X call.

In functional block 122, a string variable named ENV_CMD is set by default to RUN mode (continuous instruction execution) or it may be set to STEP mode (instruction-by-instruction execution) by a user selection from the debugger 110. For example, the user may decide to perform maintenance on the particular Y routine that has been called by an X code routine, and accordingly may make a STEP selection for the Y domain.

The simulator 104 is called by block 124 to simulate the Y machine in accordance with the selected mode and the current Y machine state. One or more Y instructions are then executed in the Y domain by the X hardware.

Block 126 next provides for driver loop termination and return according to detected conditions returned from the simulator 104 after its operation has terminated. If, as indicated by block 128, the Y program counter is determined to be out of bounds previously established as containing Y code and data, a test block 130 determines whether the Y program counter is making a return to the caller X program.

If the Y program counter matches the distinguished return address in the block 130, execution of the Y routine has been completed and is making a return to its X caller. Block 132 then provides jacketing services, i.e. it copies values as appropriate from the Y result register(s) to the X domain. Normally jacketed calls are processed with the jacketing tables used to initiate the original call. The previously referenced special jacketing code is used for auto-jacketed calls. Simulation is complete at this point as indicated by exit block 134.

If the test block 130 finds that the Y program counter corresponds to a jacketing table entry and does not match the distinguished return address, it determines that a call is being made for execution of an X routine within the current execution process in the Y domain (in the absence of a programming error). Block 136 then provides jacketing services, i.e. it initiates a Y-X call, the jacketing system 108 also accesses the jacketing tables to obtain the information needed to copy parameters from the Y-domain to the X domain, the address of the X routine being called, etc. When a return is made to the block 136 from the called X routine, the return value is copied into the Y domain and simulation is resumed as indicated by path 137.

With reference again to block 126, if the STEP mode had been requested, and as indicated by block 138, the simulation termination is accordingly determined to be a case called Step Done, functional block 140 calls the debugger 110 to indicate completion of the requested step operation and pass the previously returned status and the variable ENV_CMD. A return to the simulator enables resumed simulation without requiring direct simulator recall by the debugger 110.

The debugger 110 interprets the status and may make a report to the user. Additional simulator step operations may be requested by the debugger 110 in accordance either with a previously established internal script or by user selection. The driver variable ENV_CMD is set to RUN or STEP according to debugger requests.

The debugger 110 calls the environment manager 102 to perform other inquiry and status control functions (such as set BREAKPOINT) as more fully considered in EP-A-0532744. In the present embodiment, simulation is controlled only by the driver 112.

If the simulation termination is due to an abort 142, a breakpoint 144 or Y errors 146, block 148 calls the debugger 110 and operates in the manner described for the block 140.

### PROCESS FOR CREATING OPERATIONAL PROGRAM SYSTEM

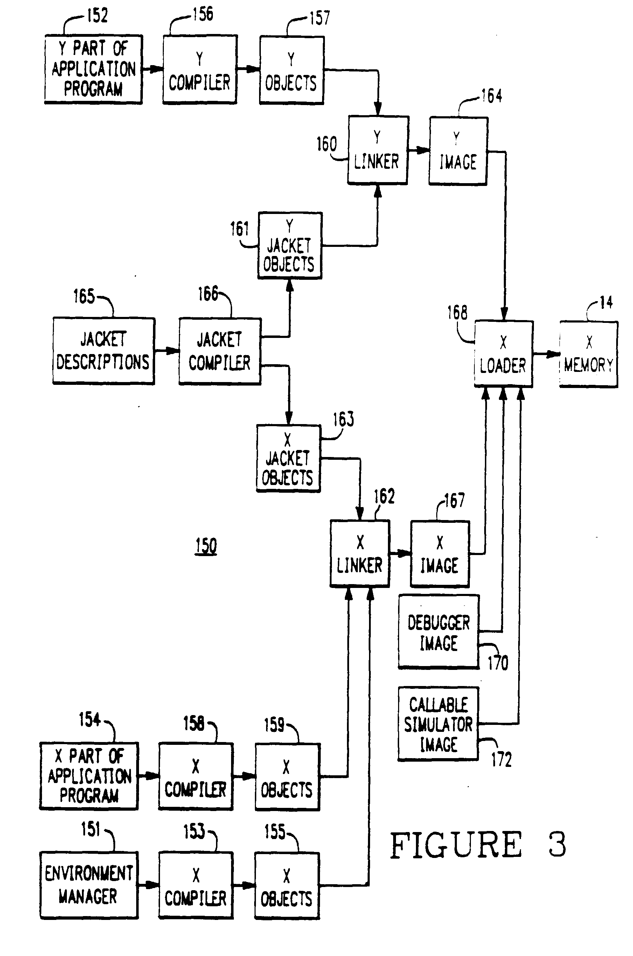

A functional block diagram in FIGURE 3 represents a process 150 employed in the preferred embodiment of the invention to create the system of programs that are stored in the memory 14 and operate as component parts of the multi-architecture, multi-code execution and debugging system 10. Although the system user may generally enter programs of any level for debugging or other execution, an application program at the user level is employed in the process 150 as the application program to be entered into the system 10 since it clearly illustrates the operation and advantages of the present invention.

As indicated, the application program to be entered is divided into a Y program part 152 and an X program part 154. For example, in migrating an existing X user level program to the Y architecture well in advance of the availability of Y hardware and its operating system, a modular or other part of the X program may be translated to Y code that forms the Y program part 152. After the two program parts 152 and 154 are entered into the system 10, debugging can be performed on the Y program part 152.

Subsequently, an additional modular part of the X program can be compiled to a new Y program part which is then entered with the debugged Y program part and the remaining X program part for debugging of the new Y program part. This modular or phased debugging process makes debugging more manageable and more convenient for several reasons including the fact that the full functionality of the final image is available to the ported Y module 152. The phased process is continued until the entire X program is converted to an equivalent debugged Y program.

In addition to enabling advance debugging as previously described, the present invention greatly facilitates the debugging process itself. Generally, user level code for the X and Y and, if desired, other architectures may be freely intermixed for execution and debugging by systems embodied in accordance with the invention.

The Y application program part 152, which may include multiple source files corresponding to respective routines or subprograms, is processed by a Y cross compiler 156 to produce one or more Y object files 157. Similarly, an X compiler 158 processes the X program part 154 to produce an X object image 159 having multiple X object files.

A cross linker program 160 combines Y object files by providing cross file linkages between calling and called Y object files (routines) in accordance with applicable calling conventions for the Y architecture. An X linker program 162 similarly combines X object files.

Since Y object files (routines) may make cross domain calls for execution of X object files (routines), and vice versa, an X-Y call interface is integrated with the Y object files and the X object files respectively by the linkers 160 and 162 thereby facilitating cross-domain execution switching at run time. Specifically, Y jacket object files 161 and X jacket object files 163 are respectively linked with the Y object files and the X object files by the linkers 160 and 162.

In the present embodiment, source code 151 for the environment manager 102 is compiled at 153 to generate X object files 155. The X linker 162 also links the environment manager object files 155 with other object files in producing a combined X image 167.

The Y cross linker 160 combines Y object files together into a single image. A Y image generated by the Y linker that contains Y code but is externally formatted as a standard shareable X image.

In the preferred embodiment, a global data system is employed so that each code X or Y can generally access all data. However, protected locations may require special processing for cross-domain access from the Y domain.

To build the call interface, jacket descriptions 165 are prepared by the user for each X and Y routine on the basis of knowledge of the applicable X and Y call conventions. In the preferred embodiment, a pair of jacket descriptions is prepared for each routine, i.e., one that applies to the calling domain and one that applies to the called domain.

A jacket compiler 166 processes the jacket descriptions to build jacketing tables which can be interpreted by other software at run-time to effect jacketing operations needed for cross-domain execution. A more complete description of jacketing and cross-domain call detection is provided in EP-0530350.

An X loader or image activator 168 links the Y image 164, the X image 167, an image 170 for the debugger 110 and an image 172 for the simulator 104. The output from the X loader 168 that is loaded into the X memory 14 and formed into executable code.

### SYSTEM FOR DETECTING CROSS-DOMAIN CALLS

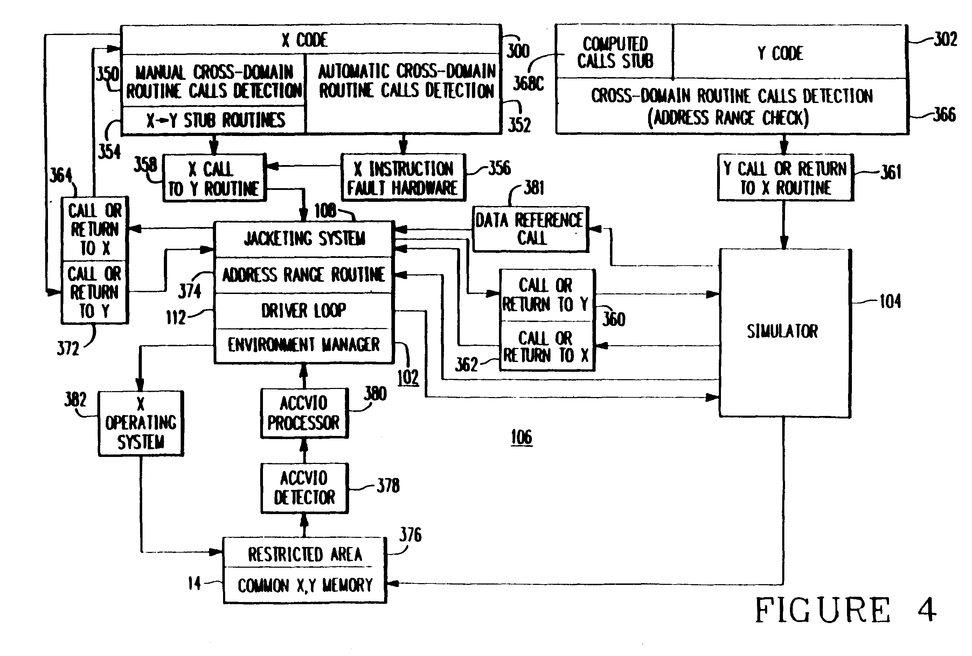

A functional block diagram shown in FIGURE 4 provides a more focused perspective of the cross-code detection system 106. Generally, the jacketing system 108 provides the jacketing needed to interface a call from the X or Y domain to the other Y or X domain once a cross-domain call has been detected by the detection system 106.

In the preferred embodiment, a cross-domain call may require a switch in the code execution from one domain to the other domain (i.e., a call for execution of a cross-domain routine). A cross-domain call may also require processing of a cross-domain data reference which, in this case, may be a request from the Y domain to read or write certain memory locations assigned to the X domain (even though the X and Y memory addresses in the memory 14 are generally globally accessible).

When X code 300 reaches a point in code execution by the X processor 12 (FIGURE 1) where a switch is to be made for execution of a routine in the Y domain, the call detection system 106 causes the jacketing system 108 to jacket the call as the driver loop 112 initiates operation of the Y simulator 104 and execution of the targeted Y routine. The simulator 104 accepts the jacketed call and executes the called routine through execution of Y code 302 in the Y domain.

A call for a return to the X domain is then made by the simulator 104 and call detection and jacketing provide for sending the return to the X domain.

In the X to Y direction of code switching, two different detection mechanisms are employed for determining when a cross-domain routine call is to be made. Thus, a mechanism 350 is provided for manual detection of X calls for execution of Y routines, and another mechanism 352 is provided for automatic detection of certain other X calls for execution of Y routines.

The mechanism 350 is termed a "manual" detector since the detection is produced by structure inserted into the X code during the X image building process described in connection with FIGURE 3. Thus, an X-Y stub routine 354 is inserted into the X code at each of preselected points in the code where a call is to be made for execution of a routine in the Y domain.

The X stub routines 354 may be employed in those cases where the address of the called routine in the Y domain is known at link time. A separate X stub routine 354 is provided for each callable Y routine. In effect, the X stub routines 354 are surrogate routines that transmit the Y routine call to the jacketing system 108. The X stub routines 354 provide a combination of very fast detection and very fast access to jacketing tables which support general jacketing capabilities.

The X stub routines 354 provide two basic functions: load a jacket index code onto the execution stack and jump to a common entry point in the environment manager 102 to carry out the X-Y cross-domain call indicated by the index value. Thus, detection of an X-Y cross-domain call by one of the X stub routines 354 occurs by the fact that execution has reached that X stub 354.

The X stub 354 routines handle cases where automatic jacketing is unable to detect a cross-domain call. For example, in the preferred embodiment, where the X architecture may be the VAX? architecture, two routine call instructions are CALL and JSB. Automatic detection is employed for the CALL cases whereas stubs are employed for the JSB cases.

Although stub routines require added programming time, they are advantageous since faster execution is achieved in at least some cases.

The automatic detection mechanism 352 is a hardware trap that employs X instruction fault hardware 356 to issue an exception which is interpreted and processed by the environment manager 102 for jacketing of the call by the jacketing system 108. The automatic mechanism 352 is employed for dynamically computed calls, where it is not known at link time whether a particular call is a cross-domain call. The automatic detection mechanism 352 works no matter which domain contains the called routine. In FIGURE 4, X calls to Y routines 358 are detected by the stub routines 354 and the instruction fault hardware 356. In other applications of the invention, the instruction fault hardware may be employed detecting calls known at link-time as well as dynamically computed calls.

Block 360 indicates the passing of a call jacketed by the jacketing system 108 to the simulator 104 for execution of the target routine in the Y domain. Once the target routine is executed, a return is made for jacketing and transmittal to the X domain as indicated by blocks 361, 362 and 364.

Cross-domain calls for execution of an X routine are made during execution of Y code 302 by the simulator 104. When a point is reached in the execution of the Y code 302 where an execution switch is to be made to the X domain, the call detection system 106 detects the cross-domain call and causes the simulator 104 to initiate jacketing of the call by the jacketing system 108.

The target X routine in the X code 300 is then executed, and a return is processed and jacketed to the simulator 104 which then resumes execution of the Y code 302.

In the preferred embodiment, a mechanism 366 is employed for detecting all Y to X cross-domain routine calls from the Y code 302. Thus, checks 368 are preferably employed against the Y address range to detect most Y-X calls since most referenced addresses are known at link-time.

A special stub 368C is preferably commonly employed for dynamically computed calls are calls for which the called routine address and domain are not known until execution time.

The stub 368C is a compiled run-time support routine that is called by an executing Y routine to perform a call to the X domain. At execution time, the target address is computed for each Y call for which the target address had been unknown at link-time.

As in the case of the subsequently described automatic cross-domain call detection system, the stub 368C "automatically" checks a routine entry bit mask to determine, in the preferred invention embodiment, the state of bit 12. If bit 12 is set, a Y call is being made and no interruption is made of the simulator execution. If bit 12 is clear, the target address for the called routine has been computed to be in the X domain and a cross-domain Y-X call is being made, the simulator execution is accordingly interrupted and the environment manager is called at a distinguished address to process the call.

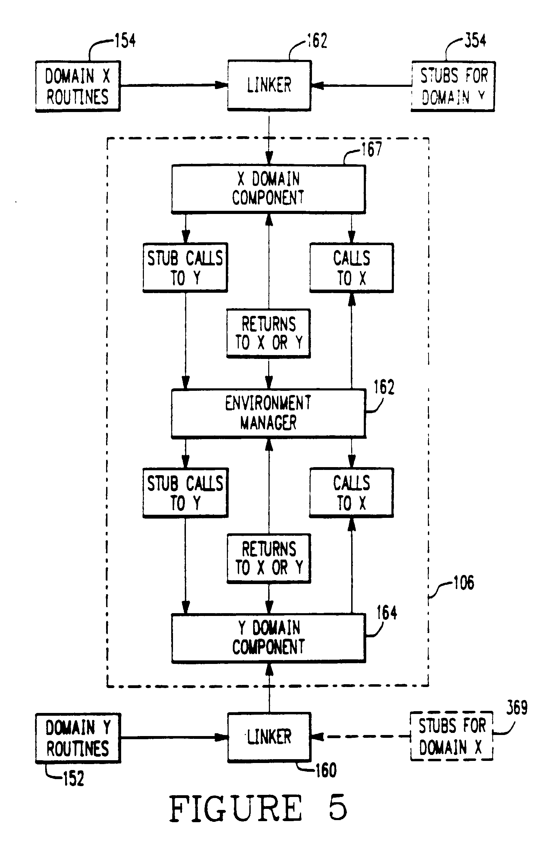

If desired, Y-X stub routines (not shown in FIGURE 4, but discussed later with regard to FIGURE 5) may alternatively be structured into the Y code at link time to provide detection of Y-X cross-domain calls for which the addresses are known at link-time.

Routine calls are passed by the check structure 368 to the simulator 104 as indicated by block 361. An address range routine 374, which is one of the support routines 114 shown in FIGURE 2A, is then called to determine which domain houses the address of the target routine.

If the X address range is found, a return is made to the driver loop 112 in the environment manager 102 for cross-domain call processing. A Y-X call is thus passed for jacketing by the jacketing system 108 as indicated by the block 362. Once jacketed, the call is passed as indicated by the block 364 for execution of the target routine in the X code 300. A return is made after the execution is completed, as indicated by blocks 372 and 360.

An overview of the creation and operation of the stub routines 354 and employable Y-X stub routines is shown in FIGURE 5. Thus, the preferred X-Y stubs 354 and employable Y-X stubs 369 are respectively linked into the X image 167 and the Y image 164. As shown, cross-domain calls and returns are made between the X and Y domains.

Cross-domain data references are also detected by the detection system 106 for processing and jacketing. Cross-domain data reference detection and jacketing is especially useful where there is an incompatibility in data format or where access restrictions exist from one domain to another domain.

In the preferred embodiment, Y-X data references made during execution of the Y code 302 to a restricted area 376 of the memory 14 are detected by an ACCVIO (access violation) X hardware detector 378. An ACCVIO processor 380 invokes the environment manager 102 to process a restricted cross-domain data reference for processing by the environment manager 102.

Operating system 382 for the X hardware is then requested to access the restricted memory area 376 to perform the requested read or write. A return is then made to the simulator 104.

### AUTOMATIC CROSS-DOMAIN CALL DETECTION SYSTEM

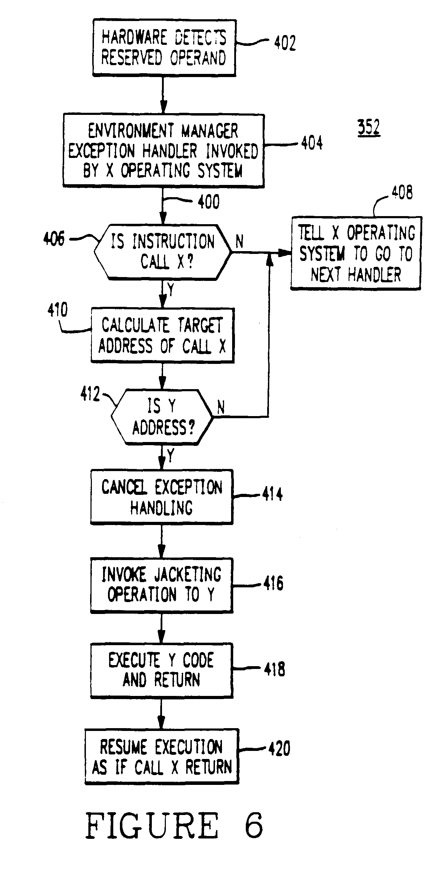

A flow chart is shown in FIGURE 6 for a reserved operand fault procedure 352 employed to detect and automatically process X to Y cross-domain routine calls. Block 402 first generates an X hardware detection of a reserved operand fault. An exception handler is then invoked in the environment manager 102 to determine whether an access exception or an X domain call has been generated.

In the preferred embodiment, procedure call instructions are provided in the X architecture with a target address that points to a structure called an entry mask. The entry mask contains a bit for each X register that should be saved on the execution stack.

With use of the entry mask, several of the registers can not be saved. Thus, if the entry mask has a bit set for one of the registers that can not be saved, the detection hardware generates a reserved operand fault.

A call to the Y domain generates a bit for a register that can not be saved and thus generates a reserved operand fault. Generally, the cross-domain-call fault is processed by the environment manager 102 to jacket the call and move execution to the target Y domain.

The following illustrates the operation of reserved operand faults:

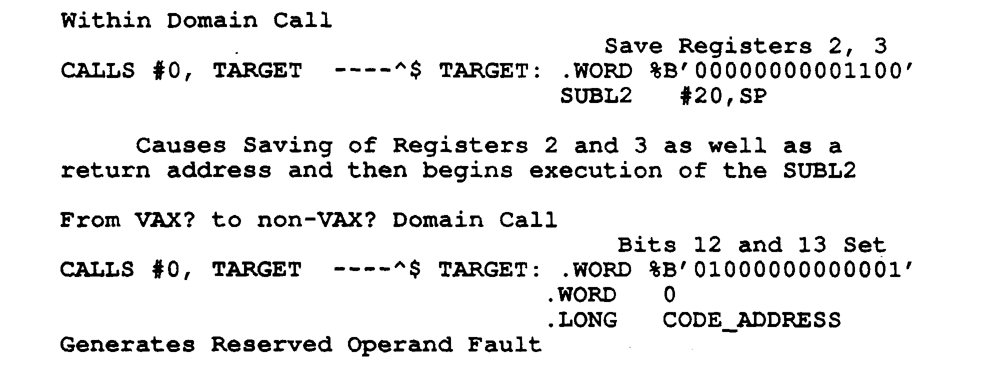

If test block 406 determines that no Y domain call has been made, block 408 directs the X operating system 382 to go to the next handler, since the cross-domain call detection system has no concern with operand faults other than a call mask fault. Under the system conventions for managing exceptions, the operating system then looks for another handler that may be responsible for processing the fault.

If a Y domain call has been made, block 410 calculates the target address of the routine call, since the call mask address is not provided by the hardware when an operand fault is generated and thus must be calculated by the fault handler.

The address range routine 374 (FIGURE 4) is then employed by test block 412 to determine the domain in which the target address is located. This permits software bugs in the X domain to be detected and permits processing of calls to domains other than the X domain in invention embodiments where more than two domains are included in the whole system.

With respect to software bugs, a programming error unrelated to making an X-Y call may also produce a reserved operand fault. If the target address is in the Y code, the reason for the exception is probably an X-Y call. If the target address is not in the Y code, an error has definitely occurred, and any attempt to start simulation would result in the simulator stopping with an out of range PC.

If the target is in the X domain, the routine 400 branches to the block 408 to route the exception call to the next X operating system handler.

If a Y address is determined, block 414 cancels the exception handling process of the X operating system 382. Block 416 then invokes a jacketing operation by the jacketing system 108, and block 418 executes the target Y code. After the target routine is executed and a return is made, X code execution is transparently resumed as indicated by block 420 as if the called routine had been executed in the X domain.

### ADDRESS RANGE CHECK

The address range check 374 in FIGURE 4 is used by the simulator 104 to detect whether execution control is to be switched out of the Y domain, to the X domain.

Generally, at initialization of the environment manager 102, a table is created that defines the address ranges of the domains in the multi- architecture system. The simulator 104 references the domain address table and interacts with the environment manager 102 to switch domain execution.

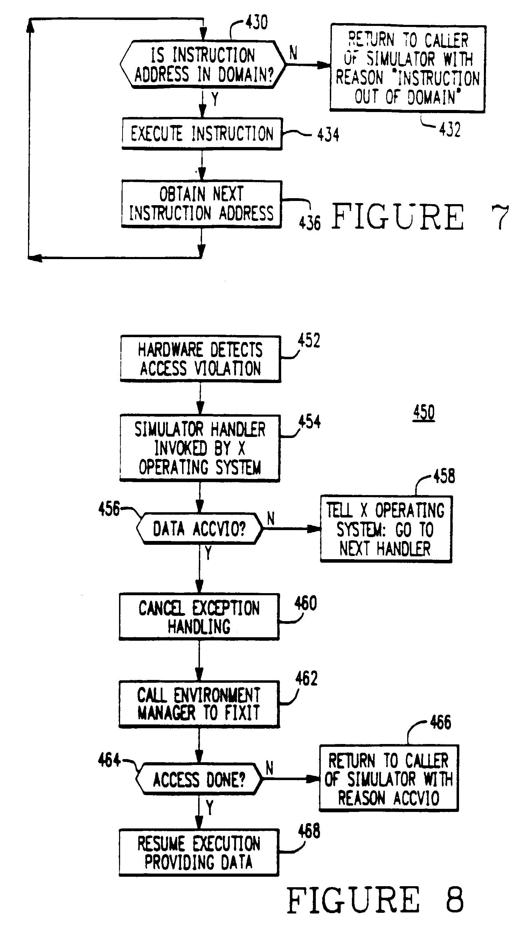

As shown in FIGURE 7, block 430 detects whether the instruction address is within the Y domain. If the instruction is outside the Y domain, block 432 makes a return to the environment manager 102 to that effect and the jacketing system 108 is invoked to jacket the call and switch execution to the X domain. The environment manager 102 determines whether the call is a callout for execution of a routine in the X domain or a return to that domain by examining the target address.

If block 430 detects an address within the Y domain, the instruction is executed in the Y domain as indicated by block 434. The next instruction address is then obtained as indicated by block 436.

### ACCVIO DATA REFERENCE HANDLING PROCEDURE

In FIGURE 8, there is shown a flowchart for a procedure 450 employed to process data references that are made by the Y simulator 104 with an access violation.

Generally, the operating system for a processor includes a program that disallows access to an address space portion to protect data therein. If another program needs to access the protected data, certain operations of the operating system must be invoked to override the disallowance and permit the needed access. In the present embodiment, the area 376 (FIGURE 4) of the memory 14 is the protected or restricted memory area that requires intervention of the X operating system 382 to satisfy a cross-domain data reference from the Y domain.

Block 452 in the procedure 450 employs the ACCVIO hardware detector 378 to detect an access violation. A simulator handler 456 is activated by block 454 to determine whether a data access violation has occurred.

If test block 456 indicates no ACCVIO, the X operating system 382 is directed to go to the next handler. If an ACCVIO has occurred, exception handling is cancelled by block 460.

The environment manager 102 is then called to process the ACCVIO, preferably by invoking operation of the X operating system 382 to obtain access to the protected address and then performing the read or write requested by the data reference from the Y domain. If the access is performed as determined by test block 464, a return is made and execution of Y code is resumed as indicated by block 468. If access fails, the simulator terminates simulation with a status indication reflecting that reason. The environment manager 102 then transfers control to the debugger 110, if active, or otherwise terminates the program.

### ROUTINE FOR JACKETING CROSS-DOMAIN CALLS

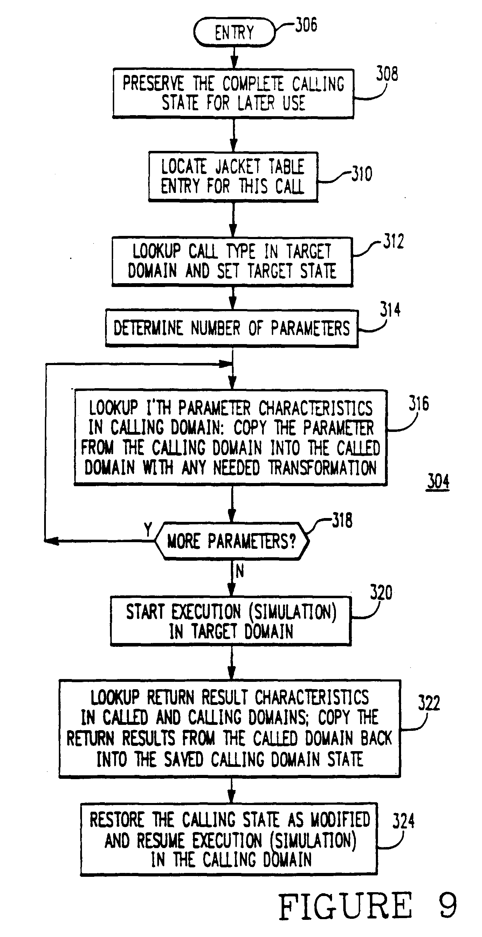

In FIGURE 9, there is shown a flow chart for a jacketing routine 304 employed by the jacketing system 108 to implement detected cross-domain calls between the X and Y domains. Entry is made at block 306 after detection of a cross-domain call.

A functional block 308 first preserves the complete calling state for later use. Next, the jacket table entry for the current call is located by block 310. The call type in the target domain is determined and the target state is set by block 312.

The number of calling convention parameters is determined by block 314. Each parameter is then processed by functional block 316. In particular, each parameter is copied from the calling domain to the called domain with any needed transformation as defined by the jacketing tables on the basis of the entered jacket descriptions. Test block 318 provides for repeated executions of the block 316 until all of the parameters are copied across the domain boundary.

Next, block 320 generates a call for execution in the target domain. If the target domain is the Y domain, the simulator 104 is activated by the environment manager 102.

For the X-Y or Y-X call return, block 322 uses the jacketing tables in the manner described for the blocks 316 and 318 to copy return results to the calling domain state saved by the block 308. Finally, block 324 restores the calling state as modified and code execution is resumed in the calling domain. Again, if the return domain is the Y domain, the simulator is activated by the environment manager 102. A more complete description of jacketing system operation is presented in EP-A-0530350.

### JACKETING OF CROSS-DOMAIN CALLS AT RUN-TIME

Two forms of jacketing are employed for calls from the X domain to the Y domain in the present embodiment: manual jacketing and automatic jacketing.

Manual jacketing is based on the jacket (linkage) structure produced at image building time. In the present embodiment, the following components are included in the jacket structure:
1. Index values by which each routine is referenced.
2. Entry point stub routines are created at build time to generate cross-domain calls; each stub merges with a common dispatch routine in the jacketing code at run-time thereby passing the index value unique to the called routine.
3. A jacketing table that has entries describing the call type and parameter passing mechanisms to be used for outgoing and incoming routines. At run-time, the jacketing code accesses the table entries for each routine by the index values for that routine.
4. Y image entry points are defined by global symbols different from the name of the called routines so that there is no name conflict between the target Y routine and the entry point X stub routine. The names of called routines are hidden at link time by not being declared globally, and the latter is defined globally to resolve the call and link it into the environment manager 102. In the preferred embodiment, it is assumed that standard calling conventions are used. Other conventions may be employed and in that event a jacket table description may also be provided for use with auto-jacketed calls.

Automatic jacketing is achieved without user intervention at image build time. In the present embodiment, it is based on the fact that a direct X call to a Y routine occurs an X operand fault. A handler in the call detection system 106 receives the reserved operand and the jacketing code then jackets the call for execution in the Y domain. Automatic jacketing requires that the calling and called routines conform to the standard calling conventions for the respective domains.

The jacketing code sends the input parameters from the X domain to the Y domain. In the case of manual jacketing, the jacket tables define parameter transfer. For automatic jacketing, parameter transfer is achieved directly. After completion of simulator execution, the call is completed by a return to the caller in a manner like that employed in making the call.

Calls from the Y domain to the X domain are all designated at build time. Index values are assigned so as to assure that calls from the Y domain for cross-domain execution are outside the Y code address space and thus are illegal. The simulator 104 stops when a cross-domain call generates an illegal address, and the jacketing system then implements the jacketing process in a manner like that described for the X-Y direction.

The jacket structure for the Y-X call includes the following:
1. Index values for the jacket tables.
2. Jacket table entries for call type and parameter passing mechanisms.
3. External symbol resolutions for unresolved references to external locations.

In FIGURE 9, there is shown a flow chart for a jacketing routine 304 employed by the jacketing system 108 to implement detected cross-domain calls between the X and Y domains. Entry is made at block 306 after detection of a cross-domain call.

A functional block 308 first preserves the complete calling state for later use. Next, the jacket table entry for the current call is located by block 310. The call type in the target domain is determined and the target state is set by block 312.

The number of calling convention parameters is determined by block 314. Each parameter is then processed by functional block 316. In particular, each parameter is copied from the calling domain to the called domain with any needed transformation as defined by the jacketing tables on the basis of the entered jacket descriptions.

Test block 318 provides for repeated executions of the block 316 until all of the parameters are copied across the domain boundary.

Next, block 320 generates a call for execution in the target domain. If the target domain is the Y domain, the simulator 104 is activated by the environment manager 102.

For the X-Y or Y-X call return, block 322 uses the jacketing tables in the manner described for the blocks 316 and 318 to copy return results to the calling domain state saved by the block 308. Finally, block 324 restores the calling state as modified and code execution is resumed in the calling domain. Again, if the return domain is the Y domain,the simulator is activated by the environment manager 102.

### CROSS-DOMAIN DATA JACKETING

Data references from the X domain to the Y domain require no special resolution since a common address space is employed in the preferred embodiment. Y code may freely reference data structures allocated in the Y image but Y code cannot implicitly see global data declarations in X routines, and jacketing is accordingly employed in the Y to X direction the necessary linkage for a Y data reference to the X domain.

The data jacket includes declarations of the symbolic name of the data structure and its size and, if desired, its access mode. Index values are employed in a manner like that employed for the jackets for routines.

In implementing a cross-domain data reference, the simulator 104 tries to use the index value for the data reference and an access violation is generated due to an illegal address. A handler is activated within the simulator and a read or write routine in the jacketing system calculates a target address in the X domain from the address of the data reference. The data is then fetched or stored and a return is made to the simulator with the data reference satisfied.

## Claims

1. A method for detecting and forwarding cross-domain calls from a first routine of an application program being executed within a first domain to a called routine that can comprise a second routine of said application program executable in a second domain, said method characterized by the steps of:
A) storing said first and second routines in respective first and second sets of memory (14) locations identified by respective first and second ranges of addresses;
B) storing a domain address table identifying said first and second address ranges of said memory locations;
C) detecting (430) whether said called routine is stored in said second address range and thus whether a call included in said first routine comprises a cross-domain call to said second routine, said detecting step comprising the step of accessing said domain address table and, if a target address identified by said call falls outside said first address range identified by said table, determining that said call comprises one of said cross-domain calls; and
D) jacketing (304) and forwarding any detected cross-domain call for implementation in said second domain, whereby said cross-domain call can be detected and implemented, and said first and second routines can be executed, during run-time of said application program.

2. The method in accordance with claim 1 performed by a multi-architecture computer system embodying a first hardware architecture, said method further comprising the steps of:
A) executing a plurality of X routines including said second routine, each of a plurality of said X routines including at least one call for service complying with a first calling convention characteristic of said first domain, said first domain comprising an X domain; and
B) simulating a second computer hardware architecture for executing a plurality of Y routines including said first routine, each of a plurality of said Y routines including at least one call for service complying with a second calling convention characteristic of said second domain, said second domain comprising a Y domain; said first and second routines comprising said application program; a plurality of said calls of a plurality of said first and second routines each comprising a cross-domain call from one of said first and second domains comprising a calling domain for service in the other of said first and second domains comprising a called domain.

3. The method in accordance with claim 2, further comprising the step of detecting said cross-domain calls from said X routines for execution of said Y routines.

4. The method in accordance with claim 3, wherein said cross-domain call detecting step includes step (C), and further includes linking a stub routine (354) to each said X routine that includes one of said cross-domain calls, said stub routine executable for identifying a target routine comprising one of said Y routines.

5. The method in accordance with claim 2, wherein each said first and second routine comprises a plurality of instructions each identified by an address, and said target address identifies one of said instructions in said called domain, and said method further comprises the step of fetching the one of said instructions identified by said call and executing said fetched instruction in said called domain if said call comprises a cross-domain call, and otherwise executing said call in said calling domain.

6. The method in accordance with claim 5, wherein said instruction specifies a data reference, and said instruction executing step includes the step of fetching data from said memory locations.

7. The method in accordance with claim 5, wherein said instruction specifies a routine call, and said instruction executing step includes executing a routine specified by said routine call.

8. The method in accordance with claim 5, further comprising the step of detecting calls from said first routines for execution of at least one of said second routines that is stored in memory locations having addresses that are unknown at link-time, said detecting step comprising said step (D).

9. The method in accordance with claim 8, further including the step of using an instruction fault to detect automatically said first routine calls that specify execution of at least one of said second routines.

10. The method in accordance with claim 8, wherein said unknown address call detecting step further includes calculating a target address for each said call having addresses that are unknown at link time, and jacketing each said call and the calculated target address for forwarding to said called domain.

11. An apparatus for detecting and forwarding cross-domain calls from a first routine of an application program being executed within a first domain to a called routine that can comprise a second routine of said application program executable in a second domain, said apparatus characterized by
A) a memory (14) for storing said first and second routines in respective first and second sets of memory locations having respective first and second ranges of addresses;
B) a domain address table for storing data identifying said first and second address ranges of said memory locations;
C) means (374) coupled with said domain address table for accessing said table for detecting whether said called routine is stored in said second address range and thus whether a call included in said first routine comprises a cross-domain call to said second routine; and
D) means (352) coupled with said detecting means for forwarding any detected cross-domain call for implementation in said second domain, whereby said cross-domain call can be detected and implemented, and said first and second routines can be executed, during run-time of said application program.

12. The apparatus in accordance with claim 11, further comprising a processor included in a multi-architecture computer system embodying a first hardware architecture, said processor being coupled with said memory, domain address table, detecting means, and forwarding means, and said processor being operable (A) to execute a plurality of X routines including said second routine, each of a plurality of said X routines including at least one call for service complying with a first calling convention characteristic of said first domain; and (B) to simulate a second computer hardware architecture for executing a plurality of Y routines including said first routine, each of a plurality of said Y routines including at least one call for service complying with a second calling convention characteristic of said second domain, said first and second routines comprising said application program; each said call of a plurality of said first and second routines comprising cross-domain calls from one of said first and second domains comprising a calling domain for service in the other of said first and second domains comprising a called domain.

13. The apparatus in accordance with claim 12, wherein each said first and second routine comprises a plurality of instructions each identified by one of said addresses, and said target address identifies one of said instructions in said called routine, and wherein said processor is operable for fetching said one instruction from said referenced address and, after jacketing, executing said instruction in said called domain if said call is determined to comprise said cross-domain call and otherwise executing said instruction in the calling domain.

14. The apparatus in accordance with claim 12, further comprising means for detecting said cross-domain calls from said X routines for execution of said Y routines.

15. The apparatus in accordance with claim 14, wherein said cross-domain call detecting means further includes means for linking a stub routine to each said X routine that includes one of said cross-domain calls, said stub routine executable for identifying a target routine comprising one of said Y routines.

## Patentansprüche

1. Verfahren zum Erfassen und Weiterleiten von Kreuzdomänen(Cross-Domain)-Aufrufen von einer ersten Routine eines Anwenderprogramms, das gerade innerhalb einer ersten Domäne ausgeführt wird, zu einer aufgerufenen Routine, die eine zweite Routine des Anwenderprogramms aufweisen kann, das in einer zweiten Domäne ausführbar ist, wobei das Verfahren durch folgende Schritte gekennzeichnet ist:
A) Speichern der ersten und der zweiten Routine in jeweiligen ersten und zweiten Gruppen von Speicher-(14)-Stellen, die durch jeweilige erste und zweite Bereiche von Adressen identifiziert werden;
B) Speichern einer Domänenadressentabelle, die die ersten und zweiten Adressenbereiche der Speicherstellen identifiziert;
C) Erfassen (430), ob die aufgerufene Routine im zweiten Adressenbereich gespeichert ist, und somit, ob ein in der ersten Routine enthaltener Aufruf einen Kreuzdomänenaufruf zur zweiten Routine aufweist, wobei der Erfassungsschritt den Schritt zum Zugreifen auf die Domänenadressentabelle aufweist, und dann, wenn eine Zieladresse, die durch den Aufruf identifiziert wird, außerhalb des ersten Adressenbereichs fällt, der durch die Tabelle identifiziert wird, Bestimmen, daß der Aufruf einer der Kreuzdomänenaufrufe ist; und
D) Verbinden (jacketing) (304) und Weiterleiten irgendeines erfaßten Kreuzdomänenaufrufs zur Implementierung in der zweiten Domäne, wodurch der zweite Kreuzdomänenaufruf erfaßt und implementiert werden kann und die erste und die zweite Routine ausgeführt werden können, und zwar während einer Laufzeit des Anwenderprogramms.

2. Verfahren nach Anspruch 1, das durch ein Multiarchitektur-Computersystem durchgeführt wird, das eine erste Hardwarearchitektur verkörpert, wobei das Verfahren weiterhin folgende Schritte aufweist:
A) Ausführen einer Vielzahl von X-Routinen, die die zweite Routine enthalten, wobei jede einer Vielzahl der X-Routinen wenigstens einen Aufruf für einen Dienst enthält, der mit einer ersten Aufruf- Konventionscharakteristik der ersten Domäne übereinstimmt, wobei die erste Domäne eine X-Domäne aufweist; und
B) Simulieren einer zweiten Computerhardwarearchitektur zum Ausführen einer Vielzahl von Y-Routinen, die die erste Routine enthalten, wobei jeder einer Vielzahl der Y-Routinen wenigstens einen Aufruf für einen Dienst enthält, der mit einer zweiten Aufruf-Konventionscharakteristik der zweiten Domäne übereinstimmt, wobei die zweite Domäne eine Y-Domäne aufweist; wobei die erste und die zweite Routine das Anwenderprogramm aufweisen; wobei eine Vielzahl der Aufrufe einer Vielzahl der ersten und zweiten Routinen jeweils einen Kreuzdomänenaufruf von der ersten oder der zweiten Domäne aufweist, die eine Aufrufdomäne für einen Dienst in der anderen der ersten und der zweiten Domäne aufweist, die eine aufgerufene Domäne aufweisen.

3. Verfahren nach Anspruch 2, das weiterhin den Schritt zum Erfassen der Kreuzdomänenaufrufe von den X-Routinen zur Ausführung der Y-Routinen aufweist.

4. Verfahren nach Anspruch 3, wobei der Kreuzdomänenaufruf-Erfassungsschritt einen Schritt (C) enthält, und weiterhin ein Verbinden einer Verzweigungsroutine (354) mit jeder X-Routine enthält, die einen der Kreuzdomänenaufrufe enthält, wobei die Verbindungsroutine zum Identifizieren einer Zielroutine ausführbar ist, die eine der Y-Routinen ist.

5. Verfahren nach Anspruch 2, wobei jede der ersten und der zweiten Routine eine Vielzahl von Befehlen aufweist, die jeweils durch eine Adresse identifiziert werden, und wobei die Zieladresse einen der Befehle in der aufgerufenen Domäne identifiziert, und wobei das Verfahren weiterhin den Schritt zum Holen des einen der Befehle aufweist, der durch den Aufruf identifiziert wird, und zum Ausführen des geholten Befehls in der aufgerufenen Domäne, wenn der Aufruf einen Kreuzdomänenaufruf aufweist, und sonst zum Ausführen des Aufrufs in der aufrufenden Domäne.

6. Verfahren nach Anspruch 6, wobei der Befehl eine Datenreferenz spezifiziert, und der Befehlsausführungsschritt den Schritt zum Holen von Daten aus den Speicherstellen enthält.

7. Verfahren nach Anspruch 5, wobei der Befehl einen Routinenaufruf spezifiziert, und der Befehlsausführungsschritt ein Ausführen einer Routine enthält, die durch den Routinenaufruf spezifiziert wird.

8. Verfahren nach Anspruch 5, das weiterhin den Schritt zum Erfassen von Aufrufen von den ersten Routinen zur Ausführung wenigstens einer der zweiten Routinen aufweist, die in Speicherstellen gespeichert ist, die Adressen haben, die zur Verbindungszeit unbekannt sind, wobei der Erfassungsschritt der Schritt (D) ist.

9. Verfahren nach Anspruch 8, das weiterhin den Schritt zum Verwenden eines Befehlsfehlers zum automatischen Erfassen der ersten Routinenaufrufe enthält, die eine Ausführung wenigstens einer zweiten Routinen spezifizieren.

10. Verfahren nach Anspruch 8, wobei der Schritt zum Erfassen eines Aufrufs mit unbekannter Adresse weiterhin ein Berechnen einer Zieladresse für jeden Aufruf enthält, der Adressen hat, die zur Verbindungszeit unbekannt sind, und ein Einhüllen jedes Aufrufs und der berechneten Zieladresse zum Weiterleiten zur aufgerufenen Domäne.

11. Gerät zum Erfassen und Weiterleiten von Kreuzdomänen(Cross-Domain)Aufrufen von einer ersten Routine eines Anwenderprogramms, das innerhalb einer ersten Domäne ausgeführt wird, zu einer aufgerufenen Routine, die eine zweite Routine des Anwenderprogramms sein kann, das in einer zweiten Domäne ausführbar ist, wobei das Gerät gekennzeichnet ist durch
A) einen Speicher (14) zum Speichern der ersten und der zweiten Routine in jeweiligen ersten und zweiten Gruppen von Speicherstellen mit jeweiligen ersten und zweiten Bereichen von Adressen;
B) eine Domänenadressentabelle zum Speichern von Daten, die die ersten und zweiten Adressenbereiche der Speicherstellen identifizieren;
C) eine Einrichtung (374), die mit der Domänenadressentabelle gekoppelt ist, zum Adressieren der Tabelle zum Erfassen, ob die aufgerufene Routine im zweiten Adressenbereich gespeichert ist, und somit, ob ein Aufruf, der in der ersten Routine enthalten ist, ein Kreuzdomänenaufruf zur zweiten Routine ist; und
D) eine Einrichtung (352), die mit der Erfassungseinrichtung gekoppelt ist, zum Weiterleiten irgendeines erfaßten Kreuzdomänenaufrufs zur Implementierung in der zweiten Domäne, wodurch der Kreuzdomänenaufruf erfaßt und implementiert werden kann und die erste und die zweite Routine ausgeführt werden können, und zwar während einer Laufzeit des Anwenderprogramms.

12. Gerät nach Anspruch 11, das weiterhin einen Prozessor aufweist, der in einem Multiarchitektur-Computersystem enthalten ist, der eine erste Hardwarearchitektur verkörpert, wobei der Prozessor mit dem Speicher, der Domänenadressentabelle, der Erfassungseinrichtung und der Weiterleitungseinrichtung gekoppelt ist, und wobei der Prozessor betreibbar ist, um (A) eine Vielzahl von X-Routinen auszuführen, die die zweite Routine enthalten, wobei jede einer Vielzahl der X-Routinen wenigstens einen Aufruf für einen Dienst enthält, der mit einer ersten Aufruf-Konventionscharakteristik der ersten Domäne übereinstimmt; und um (B) eine zweite Computerhardwarearchitektur zum Ausführen einer Vielzahl von Y-Routinen zu simulieren, die die erste Routine enthalten, wobei jede eine Vielzahl der Y-Routinen wenigstens einen Aufruf für einen Dienst enthält, der mit einer zweiten Aufrufkonventionscharakteristik der zweiten Domäne übereinstimmt, wobei die erste und die zweite Routine das Anwenderprogramm aufweist; wobei jeder Aufruf einer Vielzahl der ersten und zweiten Routinen Kreuzdomänenaufrufe von entweder der ersten oder der zweiten Domäne aufweisen, die eine Aufrufdomäne für einen Dienst in der anderen der ersten und der zweiten Domänen aufweist, die eine aufgerufene Domäne ist.

13. Gerät nach Anspruch 12, wobei jede der ersten und zweiten Routinen eine Vielzahl von Befehlen aufweist, die jeweils durch eine der Adressen identifiziert sind, und die Zieladresse einen der Befehle in der aufgerufenen Routine identifiziert, und wobei der Prozessor zum Holen des einen Befehls von der Adresse, auf die Bezug genommen ist, betreibbar ist, und, nach einem Verbinden (jacketing), zum Ausführen des Befehls in der aufgerufenen Domäne, wenn der Aufruf dazu bestimmt wird, der Kreuzdomänenaufruf zu sein, und sonst zum Ausführen des Befehls in der aufrufenden Domäne.

14. Gerät nach Anspruch 12, das weiterhin eine Einrichtung zum Erfassen der Kreuzdomänenaufrufe von den X-Routinen zur Ausführung der Y-Routinen aufweist.

15. Gerät nach Anspruch 14, wobei die Kreuzdomänenaufruf-Erfassungseinrichtung weiterhin eine Einrichtung zum Verbinden einer Verbindungsroutine mit jeder X-Routine enthält, die einen der Kreuzdomänenaufrufe enthält, wobei die Verbindungsroutine zum Identifizieren einer Zielroutine ausführbar ist, die eine der Y-Routinen ist.

## Revendications

1. Procédé de détection et d'acheminement d'appels inter-domaines depuis un premier sous-programme d'un programme d'application en cours d'exécution à l'intérieur d'un premier domaine vers un sous-programme appelé qui peut constituer un second sous-programme dudit programme d'application exécutable dans un second domaine, ledit procédé étant caractérisé par les étapes consistant:
A) à emmagasiner lesdits premier et second sous-programmes dans des premier et second ensembles respectifs d'emplacements de mémoire (14) identifiés par des première et seconde gammes respectives d'adresses;
B) à emmagasiner une table d'adresses de domaine identifiant lesdites première et seconde gammes d'adresses desdits emplacements de mémoire;
C) à détecter (430) si ledit sous-programme appelé est emmagasiné dans ladite seconde gamme d'adresses et, ainsi, si un appel compris dans ledit premier sous-programme constitue un appel inter-domaines à destination dudit second sous-programme, ladite étape de détection comportant l'étape consistant à accéder à ladite table d'adresses de domaine et, si une adresse cible identifiée par ledit appel se trouve en dehors de ladite première gamme d'adresses identifiée par ladite table, à déterminer que ledit appel constitue l'un desdits appels inter-domaines; et
D) à mettre en condition (304) et à acheminer tout appel inter-domaines détecté en vue de sa mise en oeuvre dans ledit second domaine, ledit appel inter-domaines pouvant être détecté et mis en oeuvre, et lesdits premier et second sous-programmes pouvant être exécutés, pendant le temps de déroulement dudit programme d'application.

2. Procédé selon la revendication 1, exécuté par un système informatique multi-architecture incorporant une première architecture matérielle, ledit procédé comportant, en outre, les étapes consistant:
A) à exécuter une multiplicité de sous-programmes X comprenant ledit second sous-programme, chaque sous-programme d'une multiplicité desdits sous-programmes X comprenant au moins un appel de prise en charge se conformant à une première convention d'appel caractéristique dudit premier domaine, ledit premier domaine constituant un domaine X; et
B) à simuler une seconde architecture matérielle informatique pour exécuter une multiplicité de sous-programmes Y comprenant ledit premier sous-programme, chacun des sous-programmes d'une multiplicité desdits sous-programmes Y comprenant au moins un appel de prise en charge se conformant à une seconde convention d'appel caractéristique dudit second domaine, ledit second domaine constituant un domaine Y; lesdits premier et second sous-programmes constituant ledit programme d'application; des appels d'une multiplicité desdits appels d'une multiplicité desdits premiers et seconds sous-programmes constituant chacun un appel inter-domaines en provenance de l'un desdits premier et second domaines constituant un domaine appelant demandant une prise en charge dans l'autre desdits premier et second domaines constituant un domaine appelé.

3. Procédé selon la revendication 2, comportant, en outre, l'étape consistant à détecter lesdits appels inter-domaines en provenance desdits sous-programmes X en vue de l'exécution desdits sous-programmes Y.

4. Procédé selon la revendication 3, dans lequel ladite étape de détection d'appels inter-domaines comprend l'étape (C), et comprend également le rattachement d'un sous-programme de remplacement (354) à chaque dit sous-programme X qui comprend l'un desdits appels inter-domaines, ledit sous-programme de remplacement étant exécutable pour identifier un sous-programme cible constituant l'un desdits sous-programmes Y.

5. Procédé selon la revendication 2, dans lequel chaque dit premier et second sous-programmes comporte une multiplicité d'instructions identifiées, chacune, par une adresse, et ladite adresse cible identifie l'une desdites instructions dans ledit domaine appelé, et ledit procédé comporte, en outre, l'étape consistant à extraire l'une desdites instructions identifiées par ledit appel et à exécuter ladite instruction extraite dans ledit domaine appelé si ledit appel constitue un appel inter-domaines, et, sinon, à exécuter ladite instruction dans ledit domaine appelant.

6. Procédé selon la revendication 5, dans lequel ladite instruction spécifie une référence de données, et ladite étape d'exécution d'instruction comprend l'étape consistant à extraire des données desdits emplacements de mémoire.

7. Procédé selon la revendication 5, dans lequel ladite instruction spécifie un appel de sous-programme, et ladite étape d'exécution d'instruction comprend l'exécution d'un sous-programme spécifié par ledit appel de sous-programme.

8. Procédé selon la revendication 5, comportant, en outre l'étape consistant à détecter des appels en provenance desdits premiers sous-programmes pour l'exécution d'au moins l'un desdits seconds sous-programmes qui est emmagasiné dans des emplacements de mémoire ayant des adresses qui sont inconnues au moment de la liaison, ladite étape de détection comportant l'étape (D).

9. Procédé selon la revendication 8, comprenant, en outre, l'étape consistant à utiliser une erreur d'instruction pour détecter automatiquement lesdits appels de premier sous-programme qui spécifient l'exécution d'au moins l'un desdits seconds sous-programmes.

10. Procédé selon la revendication 8, dans lequel ladite étape de détection d'appels ayant des adresses inconnues comprend, en outre, le calcul d'une adresse cible pour chaque dit appel ayant des adresses qui sont inconnues au moment de la liaison, et la mise en condition de chaque dit appel et de l'adresse cible calculée en vue de leur acheminement vers ledit domaine appelé.

11. Appareil pour la détection et l'acheminement d'appels inter-domaines depuis un premier sous-programme d'un programme d'application en cours d'exécution à l'intérieur d'un premier domaine vers un sous-programme appelé qui peut constituer un second sous-programme dudit programme d'application exécutable dans un second domaine, ledit appareil étant caractérisé par:
A) une mémoire 14 pour emmagasiner lesdits premier et second sous-programmes dans des premier et second ensembles respectifs d'emplacements de mémoire ayant des première et seconde gammes respectives d'adresses;
B) une table d'adresses de domaine pour emmagasiner des données identifiant lesdites première et seconde gammes d'adresses desdits emplacements de mémoire;
C) des moyens (374) couplés à ladite table d'adresses de domaine pour accéder à ladite table pour détecter si ledit sous-programme appelé est emmagasiné dans ladite seconde gamme d'adresses et, ainsi, si un appel compris dans ledit premier sous-programme constitue un appel inter-domaines à destination dudit second sous-programme; et
D) des moyens (352) couplés auxdits moyens de détection pour acheminer tout appel inter-domaines détecté en vue de sa mise en oeuvre dans ledit second domaine, ledit appel inter-domaines pouvant être détecté et mis en oeuvre, et lesdits premier et second sous-programmes pouvant être exécutés, pendant le temps de déroulement dudit programme d'application.

12. Appareil selon la revendication 11, comportant, en outre, un processeur compris dans un système informatique multi-architecture incorporant une première architecture matérielle, ledit processeur étant couplé auxdites mémoire et table d'adresses de domaine et auxdits moyens de détection et moyens d'acheminement, et ledit processeur étant apte (A) à exécuter une multiplicité de sous-programmes X comprenant ledit second sous-programme, chaque sous-programme d'une multiplicité desdits sous-programmes X comprenant au moins un appel de prise en charge se conformant à une première convention d'appel caractéristique dudit premier domaine; et (B) à simuler une seconde architecture matérielle informatique pour exécuter une multiplicité de sous-programmes Y comprenant ledit premier sous-programme, chaque sous-programme d'une multiplicité desdits sous-programmes Y comprenant au moins un appel de prise en charge se conformant à une seconde convention d'appel caractéristique dudit second domaine, lesdits premier et second sous-programmes constituant ledit programme d'application; chaque dit appel d'une multiplicité desdits premiers et seconds sous-programmes constituant un appel inter-domaines en provenance de l'un desdits premier et second domaines constituant un domaine appelant demandant une prise en charge dans l'autre desdits premier et second domaines constituant un domaine appelé.

13. Appareil selon la revendication 12, dans lequel chaque dit premier et second sous-programme comporte une multiplicité d'instructions identifiées chacune par l'une desdites adresses, et ladite adresse cible identifie l'une desdites instructions dans ledit sous-programme appelé, et dans lequel ledit processeur est apte à extraire ladite instruction de ladite adresse précitée et, après mise en condition, à exécuter ladite instruction dans ledit domaine appelé s'il est déterminé que ledit appel constitue ledit appel inter-domaines et, sinon, à exécuter ladite instruction dans le domaine appelant.

14. Appareil selon la revendication 12, comportant, en outre, des moyens pour détecter lesdits appels inter-domaines en provenance desdits sous-programmes X en vue de l'exécution desdits sous-programmes Y.

15. Appareil selon la revendication 14, dans lequel lesdits moyens de détection d'appels inter-domaines comprennent, en outre, des moyens pour rattacher un sous-programme de remplacement à chaque dit sous-programme X qui comprend l'un desdits appels inter-domaines, chaque dit sous-programme de remplacement étant exécutable pour identifier un sous-programme cible constituant l'un desdits sous-programmes Y.
